# EUROPÄISCHE PATENTSCHRIFT

(11) **EP 0 483 552 B1**
(45) Veröffentlichungstag und Bekanntmachung des Hinweises auf die Patenterteilung: **12.07.1995**
(21) Anmeldenummer: 91117079.3
(22) Anmeldetag: 08.10.1991
(51) Int. Cl.: B66C 1/02, B65G 47/91

(54) **Vakuumheber**
Vacuum hoisting device
Dispositif de levage par vide

(30) Priorität: 02.11.1990 DE 9015109 U
(43) Veröffentlichungstag der Anmeldung: 06.05.1992
(73) Patentinhaber: KCI Konecranes International Corporation, 05830 Hyvinkää (FI)
(72) Erfinder: Schmidt, Adolf, W-5160 Düren (DE)
(74) Vertreter: Paul, Dieter-Alfred, Dipl.-Ing.

(56) Entgegenhaltungen:
- EP-A- 0 124 673
- EP-A- 0 325 280
- GB-A- 815 752
- GB-A- 2 228 893
- US-A- 4 925 225

## Beschreibung

Die Erfindung betrifft einen Vakuumheber für den Transport von rollenförmigen Lasten, die mit den ebenen Stirnseiten aufeinandergestapelt sind, mit einer untenseitigen, kreisförmigen Haftfläche und einer Installationsfläche.

Mit solchen Vakuumhebern lassen sich Rollen aus gewickelten Bändern, deren Material beispielsweise Papier, Metall, Kunststoff oder Laminat ist, anheben und fördern. Auch flache zylindrische Hohlkörper können mit solchen Vakuumhebern umgesetzt werden. Dabei kann der Vakuumheber am Hubwerk eines Krans heb- und senkbar aufgehängt sein. Es kommen jedoch auch andere Hubwerke in Frage.

Ein gattungsgemäßer Vakuumheber ist beispielsweise in dem DE-U-84 35 161 beschrieben. Er hat untenseitig eine ebene Saugplatte, an deren Unterseite zur Bildung einer Haftfläche konzentrisch mehrere Ringdichtungen in Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung durch die Last gegeben ist. Dabei müssen die Ringdichtungen nicht kreisförmig sein, sondern können jede andere Form, z.B. ovale oder eckige Formen, haben, solange sie nur einen geschlossenen Ring bilden. Es ist auch nicht erforderlich, daß sie ineinandergelegt sind. Entsprechend können auch mehrere, im Abstand zueinander angeordnete Vakuumräume vorgesehen sein.

Die Vakuumräume sind über Öffnungen in der Saugplatte und über eine Verbindungsleitung mit einer Vakuumquelle, die einen Vakuumerzeuger hat, verbunden. In der Verbindungsleitung ist eine Ventilanordnung vorgesehen. Solange am Vakuumheber keine Last hängt, ist die Verbindung zum Vakuumerzeuger unterbrochen und der Vakuumraum bzw. die Vakuumräume belüftet.

Für das Anheben einer Last wird der Vakuumheber auf die Last abgesenkt und die Ventilanordnung dann in Saugstellung gebracht. Hierdurch wird die Verbindung zwischen Vakuumquelle und Vakuumraum bwz. Vakuumräumen hergestellt. Soweit mehrere Vakuumräume vorhanden sind, können auch zusätzliche Ventile vorgesehen sein, die so angeordnet sind, daß sie die Verbindung zur Vakuumquelle nur dann öffnen, wenn der zugeordnete Vakuumraum durch die Lat vollständig abgedeckt wird. Nachdem der Vakuumraum bzw. die Vakuumräume unter Vakuum gesetzt ist, bzw. sind, kann dieser angehoben bzw. umgesetzt werden.

Nach dem Transport und dem Absetzen der Last wird die Ventilanordnung von der Saugstellung wieder in die Belüftungsstellung umgeschaltet. Der Vakuumheber kann dann mit Hilfe des Hubwerks von der abgesetzten Last abgehoben werden.

Der bekannte Vakuumheber weist oberhalb der Saugplatte einen Vakuumkessel auf, der - wie die Saugplatte - im Horizontalschnitt einen kreisrunden Querschnitt hat. Dessen Oberseite bildet eine Installationsfläche zur Anordnung der verschiedenen Aggregate und Vorrichtungen, die für den Betrieb des Vakuumhebers notwendig sind, beispielsweise der Vakuumerzeuger, die Ventilgruppen, der Schaltkasten, ein Drucklufterzeuger, ein Notvakuumerzeuger, Batterien und dergleichen sowie die unteren Umlenkrollen des Hubwerkes. Durch Automatisierung und Anordnung von Hilfsaggregaten entstehen auf der Installationsflächen Platzprobleme, so daß einzelne Aggregate schon für Servicezwecke ausschwenkbar angeordnet werden mußten. Der Durchmesser der Installationsfläche läßt sich jedoch nicht weiter vergrößern, da die Rollenstapel, die bis 12 Meter und mehr hoch sein können, aus Platzgründen sehr eng nebeneinander gestellt werden. Beispielsweise beträgt der geringste freie Abstand zwischen zwei Rollenstapeln mit Rollendurchmessern bis 2.50̸0̸ mm derzeit nur 10̸0̸ mm. Damit der Vakuumheber beim Einfahren in eine von Rollenstapeln umgebende Schlucht nicht mit diesen kollidiert, darf er nicht größer sein als der größte Durchmesser der aufzunehmenden Rollen.

Es sind deshalb Überlegungen angestellt worden, einzelne Aggregate vom Vakuumheber selbst herauszunehmen und im Kranbereich anzuordnen. Dies hat jedoch den Nachteil, daß - je nach Aggregat - lange Kabel bzw. Schlauchverbindungen vorgesehen werden müssen.

Der Erfindung liegt die Aufgabe zugrunde, einen Vakuumheber der eingangs genannten Art so zu gestalten, daß mehr Installationsraum zur Verfügung gestellt wird.

Diese Aufgabe wird erfindungsgemäß dadurch gelöst, daß die Installationsfläche eine Außenkontur mit über die Haftfläche nach außen vorstehenden Eckabschnitten aufweist, wobei die die Ecken der Eckabschnitte verbindenden Seitenkanten nach innen eingezogen sind. Dieser Erfindung liegt die Erkenntnis zugrunde, daß der Minimalabstand zwischen einem Rollenstapel und den diesen umgebenden, weiteren Rollenstapel nur jeweils an einer Stelle gegeben ist, nämlich jeweils an der Verbindungsgeraden zwischen den Mittelpunkten der Rollenstapel. In dem Bereich zwischen diesen Verbindungsgeraden ist der Abstand größer und es entstehen somit freie Flächenbereiche. Grundgedanke der Erfindung ist es, diese Flächenbereiche durch in diese hineinragende Eckabschnitte für die Installationsfläche zu nutzen und hierdurch deren Gesamtfläche zu vergröØßern, ohne daß die Gefahr von Kollisionen mit benachbarten Rollenstapeln gesteigert wird. Die Anzahl und Formgebung der Eckabschnitte kann jeweils an das Ordnungsprinzip der Lagerung der Rollenstapel angepaßt werden, um den vorhandenen Raum zwischen den Rollenstapeln optimal zu nutzen.

Bei den modernen Rollenlagern wird überwiegend eine Anordnung getroffen, bei der die Mittelpunkte der Rollenstapel die Ecken eines gleichseitigen Dreiecks bilden. In diesem Fall ist es zweckmäßig, daß die Außenkontur der Installationsfläche als regelmäßiges Vieleck, und zwar vorzugsweise als regelmäßiges Sechseck, ausgebildet ist. Bei einer anderen Anordnung der Rollenstapel kommen selbstverständlich abweichende, den vorhandenen Raum optimal ausnutzende Vielecke in Frage.

In weiterer Ausgestaltung der Erfindung ist vorgesehen, daß die Seitenkanten Bogenform haben. Im konkreten Fall geschieht dies zweckmäßigerweise so, daR der Mittelpunkt des Radiusses den bogenförmigen Seitenkanten mit dem Mittelpunkt des jeweils benachbarten Rollenstapels zusammenfällt, so daß die Seitenkanten über ihre gesamte Länge den zulässigen Minimalstand zum benachbarten Rollenstapel haben und damit der freie Raum optimal genutzt wird. Um nicht scharfkantige Ecken zu erhalten, sollten diese abgestumpft sein. Der sich hierdurch ergebende Flächenverlust ist ohnehin gering, da die spitz zulaufenden Ecken kaum für Aggregate nutzbar sind.

In der Zeichnung ist die Erfindung anhand eines Ausführungsbeispiels näher veranschaulicht. Es zeigen:

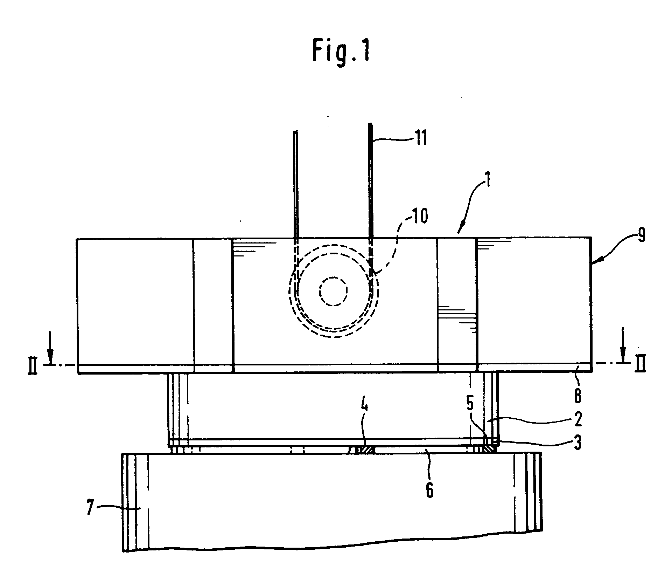

- Figur 1: eine Seitenansicht eines erfindungsgemäßen Vakuumhebers mit Papierrolle und

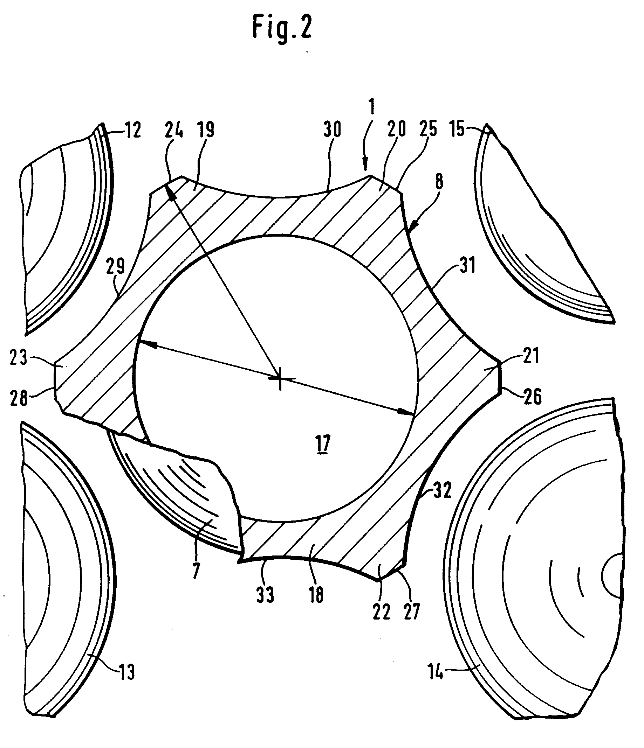

- Figur 2: eine schematische Draufsicht auf die Installationsfläche des Vakuumhebers gemäß Figur 1 ohne Aggregate.

In Figur (1) ist ein Vakuumheber (1) in der Seitenansicht dargestellt. Er hat untenseitig einen Vakuumkessel (2), der mit einem hier nicht näher dargestellten Vakuumerzeuger in Verbindung steht und als Vakuumreservoir dient. Der Vakuumkessel wird - wiederum untenseitig - von einer Saugplatte (3) abgeschlossen.

An der Unterseite der Saugplatte (3) sind - zueinander konzentrisch - eine innere Ringdichtung (4) und eine äußere Ringdichtung (5) angeordnet, die zwischen sich einen ringförmigen Vakuumraum (6) einschließen, der eine Haftfläche bildet. Mit den Ringdichtungen (4, 5) steht der Vakuumheber (1) auf der ebenen Stirnfläche einer Papierrolle (7) auf. Diese Papierrolle (7) ist im Durchmesser etwas größer als der Durchmesser des - im übrigen im Horizontalschnitt kreisrunden - Vakuumkessels (2).

Auf dem Vakuumkessel (2) ist eine Installationsplatte (8) angeordnet, deren Außenkontur über den Außenumfang des Vakuumkessels (2) vorsteht. Von dieser Außenkontur hoch steht eine Gehäusewandung (9), die die zum Vakuumheber (1) gehörenden und hier nicht näher dargestellten Aggregate, wie beispielsweise Vakuumerzeuger, Notvakuumerzeuger, Battarien, elektrische Schaltschränke etc. umgibt. Ferner sind innerhalb der Gehäusewandungen (9) Umlenkrollen (10̸) drehbar gelagert, über die der Vakuumheber (1) an den Seilen (11) eines hier nicht näher dargstellten Hubwerks heb- und senkbar aufgehängt ist.

Die besondere Ausbildung der Außenkontur der Installationsplatte (8) und der Gehäusewandung (9) ergibt sich insbesondere aus der Darstellung gemäß Figur (2). Sie zeigt schematisch den in die Schlucht zwischen vier Papierrollenstapeln (12, 13, 14, 15) eingefahrenen Vakuumheber (1) in der Draufsicht auf dessen Installationsplatte (8), wobei der Vakuumheber (1) die zwischen diesen Papierrollenstapeln (12, 13, 14, 15) eingelagerte Papierrolle (7) aufnehmen soll. Dabei befindet sich der Vakuumheber (1) zentrisch über dieser Papierrolle (7). Die Papierrollenstapel (12, 13, 14, 15) und die Papierrolle (7) sind derart zueinander angeordnet, daß ihre Mittelpunkte die Ecken eines gleichseitigen Dreiecks bilden, damit eine möglichst dichte Packung erreicht wird.

Die Fläche der Installationsplatte (8) ist zeichnerisch in eine Kreisfläche (17) und eine schraffiert dargestellte Zugewinnfläche (18) unterteilt. Die Kreisfläche (17) stimmt überein mit der Fläche, die der Vakuumkessel (2) einnimmt und die im wesentlichen mit der Haftfläche übereinstimmt. Die Zugewinnfläche (18) ist die Fläche, die durch den Überstand der Installationsplatte (8) über den Vakuumkessel (2) in Verfolg der erfindungsgemäßen Lehre für weitere Installationszwecke gewonnen worden ist. Sie ist dadurch entstanden, daß die Installationsplatte (8) im wesentlichen als regelmäßiges Sechseck mit Eckabschnitten (19, 20̸, 21, 22, 23,) - der sechste Eckabschnitt ist zeichnerisch weggeschnitten - ausgebildet worden ist. Die Eckabschnitte (19, 20̸, 21, 22, 23) weisen zwecks Vermeidung scharfter Kanten Abplattungen (24, 25, 26, 27, 28) auf. Von den Kanten der Abplattungen gehen Seitenkanten (29, 30̸, 31, 32, 33) aus, die bogenförmig konkav nach innen eingezogen sind, wobei dies in Anpassung an die benachbarten Papierrollenstapel (12, 13, 14, 15) derart geschehen ist, daß die Mittelpunkte der Radien der Seitenkanten (29, 30̸, 31, 32, 33) mit den Mittelpunkten der jeweils benachbarten Papierrollenstaplen (12, 13, 14, 15) zusammenfallen. Dies ergibt den höchstmöglichen Flächengewinn für die Installationsplatte (8) unter Beibehaltung des jeweils zulässigen Abstandes zwischen den Seitenkanten (29, 30̸, 31, 32, 33) und den Mantelflächen der Papierrollenstapel (12, 13, 14, 15).

Im vorliegenden Fall ist der Flächengewinn für die Installationsplatte (8) besonders groß, weil die Kreisfläche (17) und damit der Vakuumkessel (2) nicht den höchstzulässigen Durchmesser haben, d.h. der geringste Abstand zwischen dem Vakuumkessel einerseits und den benachbarten Papierrollenstapel (12, 13, 14, 15) andererseits ist größer als nötig. Selbst wenn aber der Vakuumkessel (2) mit dem für diesen Anwendungsfall größtmöglichen Durchmesser hergestellt wird, so daß die Kreisfläche (17) bis an die innenliegensten Punkte der Seitenkante (29, 30̸, 31, 32, 33) heranreicht, ergibt sich durch das Vorsehen der Eckabschnitte (19, 20̸, 21, 22, 23) noch ein erheblicher Flächengewinn für die Installationsplatte (8) und damit für die Anordnung von Aggregaten.

## Patentansprüche

1. Vakuumheber (1) für den Transport von rollenförmigen Lasten (7), die mit den ebenen Stirnseiten aufeinandergestapelt sind, mit einer untenseitigen, kreisförmigen Haftfläche (17) und einer Installationsfläche (8),
dadurch gekennzeichnet, daß die Installationsfläche (8) eine Außenkontur (24 bis 33) mit über die Haftfläche (17) nach außen vorstehenden Eckabschnitten (19 bis 23) aufweist, wobei die die Ecken (24 bis 28) der Eckabschnitte (19 bis 23) verbindenden Seitenkanten (29 bis 33) nach innen eingezogen sind.

2. Vakuumheber nach Anspruch 1,
dadurch gekennzeichnet, daß die Außenkontur (24 bis 33) als regelmäßiges Vieleck ausgebildet ist.

3. Vakuumheber nach Anspruch 2,
dadurch gekennzeichnet, daß die Außenkontur (24 bis 33) ein Sechseck bildet.

4. Vakuumheber nach einem der Ansprüche 1 bis 3,
dadurch gekennzeichnet, daß die Seitenkanten (29 bis 33) Bogenform haben.

5. Vakuumheber nach einem der Ansprüche 1 bis 4,
dadurch gekennzeichnet, daß die Ecken (24 bis 28) abgestumpft sind.

## Claims

1. Vacuum hoisting device (1) for the transportation of roll-like loads (7) which are stacked one upon the other by the planar end sides, having a circular attachment surface (17) on the bottom and an installation surface (8), characterized in that the installation surface (8) exhibits an outer contour (24 to 33) with corner portions (19 to 23) projecting outwards beyond the attachment surface (17), the side edges (29 to 33) which connect the corners (24 to 28) of the corner portions (19 to 23) being drawn inwards.

2. Vacuum hoisting device according to Claim 1, characterized in that the outer contour (24 to 33) is designed as a regular polygon.

3. Vacuum hoisting device according to Claim 2, characterized in that the outer contour (24 to 33) forms a hexagon.

4. Vacuum hoisting device according to Claims 1 to 3, characterized in that the side edges (29 to 33) are in arcuate form.

5. Vacuum hoisting device according to one of Claims 1 to 4, characterized in that the corners (24 to 28) are blunted.

## Revendications

1. Dispositif de levage par le vide (1) pour transporter des charges en forme de rouleaux (7) qui sont empilées les unes sur les autres par leurs faces frontales planes, comprenant une surface d'adhérence (17) circulaire située sur le dessous et une surface d'installation (8), caractérisé en ce que la surface d'installation (8) présente un contour extérieur (24 à 33) avec des zones d'angle (19 à 23) faisant saillie de la surface d'adhérence (17) vers l'extérieur, sachant que les arêtes latérales (29 à 33) reliant les coins (24 à 28) des zones d'angle (19 à 23) sont rentrantes.

2. Dispositif de levage par le vide selon la revendication 1, caractérisé en ce que le contour extérieur (24 à 33) est réalisé sous la forme d'un polygone régulier.

3. Dispositif de levage par le vide selon la revendication 2, caractérisé en ce que le contour extérieur (24 à 33) forme un hexagone.

4. Dispositif de levage par le vide selon l'une des revendications 1 à 3, caractérisé en ce que les arêtes latérales (29 à 33) ont la forme d'arcs de cercle.

5. Dispositif de levage par le vide selon l'une des revendications 1 à 4, caractérisé en ce que les coins (24 à 28) sont aplatis.
